# EUROPEAN PATENT APPLICATION

(11) **EP 1 881 678 A1**
(43) Date of publication of application: **23.01.2008**
(21) Application number: 07108365.3
(22) Date of filing: 16.05.2007
(51) Int. Cl.: H04L 29/08

(54) **Media Sharing Service**

(30) Priority: 16.05.2006 GB 0609595
(71) Applicant: Mobix Interactive Limited, London SW10 0QJ (GB)
(72) Inventor: Grant, Robert, London, SW10 0QJ (GB)
(74) Representative: Read, Matthew Charles

(57) **Abstract**

A method of sharing media, such as video clips, among a plurality of mobile device users 17-a, 17-b, 17-c is provided, in which classification information is assigned to media submitted by a subscriber 6 before it is transmitted to a processing module 1. The media classification information is compared with classification information relating to contacts of the subscriber 6 and the contacts are alerted to the presence of media in the processing module 1 in accordance with the result of the comparison. The contacts may then request that the media is delivered to their mobile devices 17-a, 17-b, 17-c. A method of configuring a subscriber mobile phone 7 to enable media classification to be performed thereon is also provided.

## Description

The present invention relates generally to the field of multimedia, and in particular, but not exclusively, to the sharing of video clips between mobile phone users.

Online photo albums and photo-sharing services are widely used to enable memories, discoveries and experiences to be shared with friends and family in a way which is quick, easy and simple, without the usual constraints of time and place. Their success, and the emergence of new video services, shows that consumers of all ages want to use these services regularly.

Typically, an online photo album is created by a user via a website. Photos are uploaded onto a server via in digital format via the website, having been transferred onto a computer from a digital camera or the like. Once the photos have been uploaded, they can be accessed from a webpage on which thumbnail images of the photos are arranged according to a template designed by the host service provider. A link to the webpage may be sent to contacts with whom the user wishes to share the photos, which may be a type of so-called "private" album, where access is by invitation only, or the photo album may simply be freely accessible from a home page associated with the user's account with the service provider, which may be a type of so-called "public" album where access is available to all. A typical video service has a similar structure.

There are, however, disadvantages associated with such a service. The main disadvantage is that a computer is needed by the user in order to transfer media files from a camera or the like to a server, from which they are accessed by friends and family. If the user is in a remote location, with no access to a computer, it may not be possible for photos to be shared with friends and family until a much later date than that on which the photos themselves were taken.

A means of immediate sharing of photo files is provided by the use of the Multimedia Messaging Service (MMS) on mobile phones. This service enables a user to take a picture using the camera function on a mobile phone, and to send the picture as a photo file to another mobile user in much the same way as a text message sent via the Short Message Service (SMS). Thus instant sharing is enabled, although a separate message must be sent to each contact with whom the user wishes to share the photo, which may be time consuming and expensive.

A further disadvantage of an online photo album is that in the case of a public album, some photos may be made available for general viewing when in fact their content renders them suitable for viewing by only certain contacts. Although such a problem can be overcome by the use of a private album, each album must be configured in accordance with its content, by manually specifying each contact who is allowed to access it. The process can be simplified by grouping contacts together by category, such as friends, and family, and controlling access to the photo album in a groupwise manner, but such contact management must be performed on a computer, which as mentioned above may not always be possible.

According to an aspect of the present invention, there is provided a method of sharing media according to claims 1 and 2. The present invention seeks to overcome the above problems by providing a service enabling sharing of media among contacts in a way which does not require the use of a computer to perform media and contact management after media is recorded. Classification of recorded media is instead performed on a mobile device, and the classification is compared with contact classification data, so that the media may be shared accordingly with the appropriate contacts as soon as it is recorded. The present invention has particular applicability to media sharing among users of mobile devices, such as mobile phones or PDAs. The media which is shared may be of any suitable format, for example photos, audio clips or videos.

As a computer interface is not involved in controlling media distribution, media is preferably shared with the appropriate contacts directly via means such as a WAP push message, containing a link to the media file enabling it to be downloaded from a server. Means for specifying the contacts with whom the media is to be shared can be specified, together with a media file, before submission of the media to the server, so that a processing module, which accesses the server, can control the generation of the WAP push messages for the appropriate contacts.

In order to facilitate management of the service provided by the method of the present invention, a subscription process is preferably implemented via a website, enabling subscribers to create a profile containing information concerning their mobile device, and a list of contacts. By registering in this way, an initial configuration of the subscriber's contact settings can be specified easily and the website need not be accessed again during media sharing.

According to a further aspect of the present invention there is provided a method of configuring a mobile device for sharing media according to claim 14. In this method, registration of the subscriber profile is completed on a website and an application is then issued to the mobile device of the subscriber to enable the service to be used. The issue of such an application enables media and contact management to be performed on a mobile device rather than requiring intervention via a website whenever media is to be shared.

According to a further aspect of the present invention, there is provided a mobile device application and a mobile device according to claims 23 and 24 respectively,

According to a further aspect of the present invention, there is provided an apparatus for sharing media among a plurality of users according to claim 27.

According to a further aspect of the present invention, there is provided a system for sharing media among a plurality of users according to claim 35.

According to a further aspect of the present invention, there is provided a system for configuring a subscriber mobile device for sharing media according to claim 45.

Further optional features of the system and method according to the present invention are set out in the dependent claims.

Embodiments of the present invention will be described with reference to the accompanying drawings, of which:
Figure 1 shows a simplified overview of a media sharing service provided in accordance with the present invention;
Figure 2 is a schematic diagram of the components used to implement an embodiment of the present invention;
Figure 3 is a schematic diagram of a mobile phone used by a subscriber to the media sharing service;
Figure 4 is a flow chart showing the subscription process enabling use of the media sharing service;
Figure 5a shows a first user interface used in the subscription process of Figure 4;
Figure 5b shows a second user interface used in the subscription process of Figure 4;
Figure 5c shows a third user interface used in the subscription process of Figure 4;
Figure 5d shows a WAP push interface used in the subscription process of Figure 4;
Figure 6a is a flow chart showing the steps of the video alert process of an embodiment of the present invention;
Figure 6b is a flow chart showing the steps of the video sharing process of an embodiment of the present invention;
Figure 7 shows a user interface used in the video classification step of the process of Figure 6a.
Figure 8a illustrates the stages involved in the WAP push generation of the process of Figure 6a;
Figure 8b illustrates the contact authentication and media delivery steps of the processes of Figure 6b;
Figure 9 shows a user interface used in the video delivery step of the process of Figure 6b;
Figure 10a shows a first example of a video frame with advertising as delivered to a subscriber; and
Figure 10b shows a second example of a video filmstrip with advertising as delivered to a subscriber.

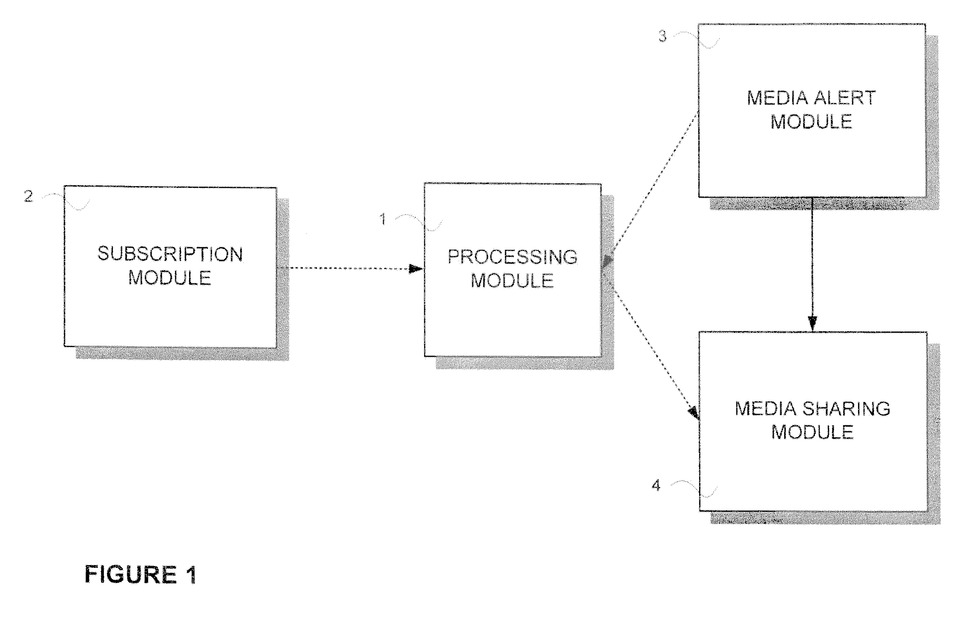

Figure 1 shows an overview of the functional modules used in the media sharing service provided by an embodiment of the present invention. The service is controlled by a processing module 1 which comprises a processor such as a CPU or a distributed processor. A subscription module 2 provides a means by which a user subscribes to use the service, via a website for example. In the subscription process, a user creates a subscriber profile containing user data and contact information regarding contacts with whom media is intended to be shared. The subscriber profile is stored in a database which forms part of the processing module 1.

Once the subscription process is complete, the subscriber is able to use methods of the present invention provided by the media alert 3 and sharing 4 modules. The media alert module 3 provides means by which the subscriber may record media and classify it, before submitting it to a media database in the processing module 1. The classification of the submitted media is compared with contact information from the subscriber profile, and contacts are selected with whom the media may be shared. The selected contacts are then alerted to the presence of the media in the database, so that they can access it if it desired.

The media sharing module 4 provides means by which the media is shared with the selected contacts. A contact making a request to view media is authenticated by comparing contact details with those held on a database, and if successful, the media is processed and sent to the contact for viewing.

Having subscribed to use the service, the subscriber may use the media alert and sharing processes as many times as desired, or within the limits provided by the terms of the subscription, for example a month. Use of the subscription process therefore need only be required at the start of the subscriber's use of the media sharing service.

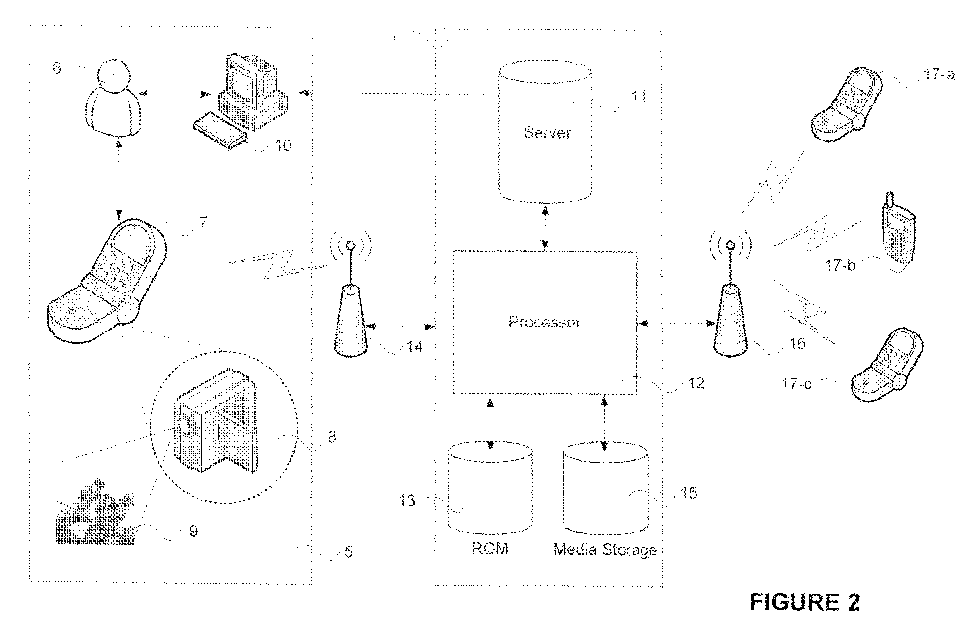

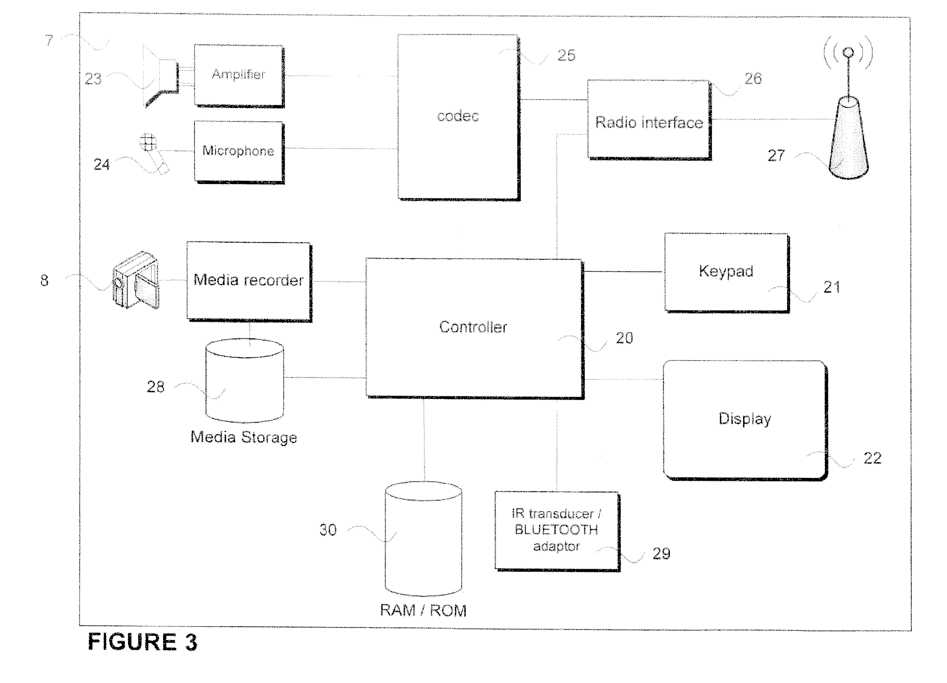

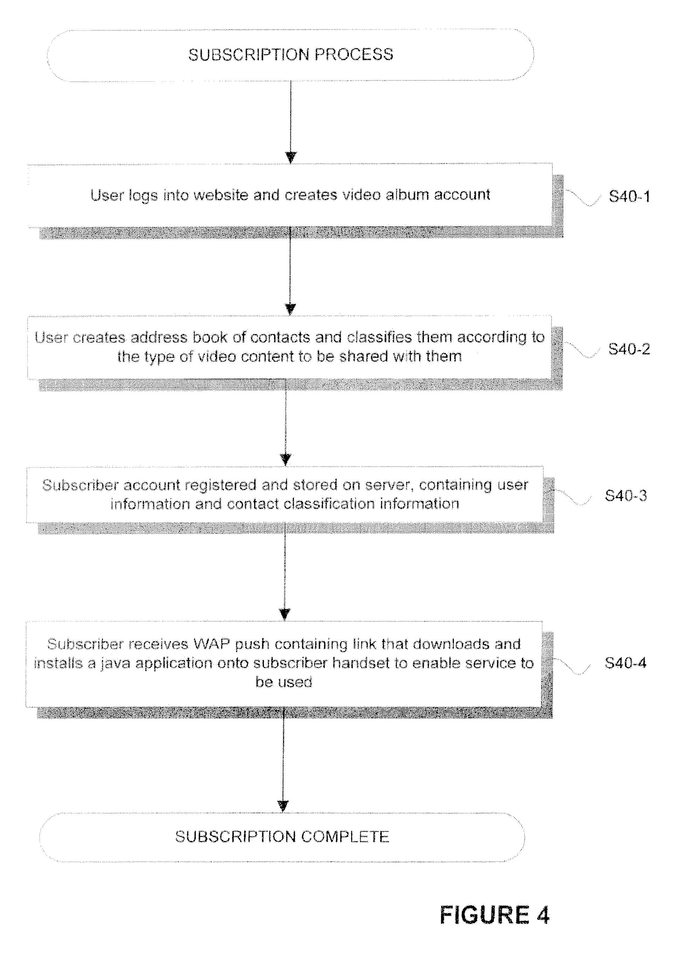

The components used to implement an embodiment of the present invention and their interactions are shown in Figure 2. Sub-system 5 contains components which are accessible to a subscriber 6. Subscriber 6 has a mobile phone 7, which has a camera functionality provided by camera 8, shown in enlarged form. Camera 8 may be capable of recording a scene 9 in either still photo or video format, and may have a microphone (not shown) associated with it for recording audio data. A schematic representation of the phone 7 is shown in more detail in Figure 3. Subscriber 6 registers to use the media sharing service, using a website accessed via a computer 10. The subscription process is described in detail below with reference to Figure 4.

In an embodiment of the present invention, subscriber 6 creates a profile containing user data and contact data, as will be described below. The subscriber profile is stored on a server 11, which forms part of a processing module 1. The interaction between computer 10 and server 11 may be via a serial connection, an internet or other network connections, as is well-known in the art.

Processing module 1 is controlled by the action of a processor 12, which operates according to a set of program instructions stored in a ROM 13. Subscriber mobile phone 7 communicates wirelessly with the processing module 1 via communication device 14, illustrated schematically by a base station in Figure 2, which may be part of a standard network as known in the art. The wireless network may comprise a Public Land Mobile Network (PLMN). Media recorded by the camera 8 may be stored in the mobile phone 7 and transmitted to the processing module 1 via the base station 14, where it is stored in a media storage database 15.

Processing module 1 communicates wirelessly via a second base station 16 with a plurality of mobile devices 17-a, 17-b and 17-c such as mobile phones or PDAs, to enable media stored in the media storage database 15 to be shared with them. The communication is controlled by the action of the processor 12. The base stations 14 and 16 may be part of the infrastructure of an existing network to which the mobile device users subscribe.

Figure 3 is a schematic representation of the subscriber's mobile phone 7, although it is to be appreciated that such an arrangement could apply equally to the mobile phone 17 of a contact. The phone 7 has a conventional layout, with a controller 20 such as a CPU or distributed processor, and input/output devices such as a keypad 21 and display 22. The phone has a speaker amplifier 23 for enabling a user to hear calls, and a microphone 24 for voice recordal. A coder-decoder unit (codec) 25 is used to convert analogue signals from the microphone 24 into digital form, and to convert digital signals into analogue signals for use by the amplifier 23.

A radio interface 26 enables modulation and demodulation of signals transmitted to and received from antenna 27, for the purposes of making calls or sending MMS and SMS messages. The radio interface 26 is controlled by the controller 20, and is linked to the codec 25 to enable the user's voice signals to be modulated for transmission in a call, and for a contact's voice signals to be demodulated from the radio signals received by the antenna 27, to an audible form.

The phone 7 has a media recorder such as a camera 8, which has a lens suitable for capturing still images as well as video, with a microphone (not shown) enabling sound recording. The media recorder is controlled by the controller 20, through a user interface displayed on the display 22. Recorded media is stored in files in a media storage library 28. The library 28 is also suitable for receiving media received from other phones through an adaptor 29 suitable for infrared or BLUETOOTH communication.

The phone 7 also has a memory 30, comprising a RAM and a ROM, the latter containing program instructions which are executed by the controller 20 in order for the phone 7 to operate.

The phone 7 operates via a number of user interfaces which are displayed on display 22, and can be navigated using the keypad 21, to enable selection of a contact from a phonebook, creation of an SMS message, and other such functions. The phone 7 has a Wireless Application Protocol (WAP) browser interface which enables hyperlinks to mobile websites to be followed when selected by the keypad 21, and the content of these websites to be displayed on the display 22. On transmitting a signal through the PLMN as a result of selecting the hyperlink, the website content is transmitted to the phone through the PLMN. Internet access may be provided by such a browser rather than WAP access. The phone 7 also has an interface to enable still and video images to be displayed on the display 22.

Figure 4 shows a flow chart showing the steps performed in the subscription process by which a subscriber registers to use the media sharing service. The subscription process and its means of implementation, forms the subscription module 2 described above. The process will be described with reference to the creation of a video album account, although it will be appreciated that other forms of media are equally applicable.

In step S40-1, subscriber 6 uses computer 10 to log on through the internet to a website provided by server 11, associated with the media sharing service, and follows basic on-screen instructions to set up a subscriber profile, using information such as a user name, mobile number and password. As part of the subscriber profile, a video album account is created, which takes the form of an interface (not shown) enabling access to media stored in the media database 15. On creation of the video album account, a portion of the media database memory 15 is allocated to the subscriber 6, for containment of video clips submitted to the processing module 1 to be described below.

In step S40-2, subscriber 6 creates a list of contacts with whom media is intended to be shared. The contacts may be friends and family for example. The contact list may take the form of an address book or directory, listing contact numbers and other forms of identification for each contact. Subscriber 6 classifies each person on the contact list according to the type of video content which is intended to be shared with them. The classification may be based on a predetermined range of categories, and may define particular types of video which are appropriate for a given contact, or an upper limit on a rating scale, above which rating video is not to be shared with the contact.

In step S40-3, the subscriber profile, containing information entered in step S40-1 and the classified contact list created in step S40-2, is stored on server 11 in processing module 1. Once the subscriber profile has been stored, it may be edited at a later stage by the subscriber 6 logging onto the website and modifying user or contact details. Password protection of the subscriber profile is a suitable means for preventing others from changing it.

In step S40-4, processing module 1 controls the generation of a WAP push message, sent to the subscriber's mobile phone 7 via base station 14. The WAP push message is displayed via an interface on the display 22 of the subscriber's phone 7 and contains a hyperlink to a Java application which can be downloaded through the PLMN to the subscriber's mobile phone 7 once the link is selected via keypad 21. The download and installation of the Java application confirms completion of the subscription process, and a message to this effect may be displayed on the display 21 once the application has been installed. Thereafter, the subscribers' mobile phone 7 is configured to use the media sharing service and it can be used by the subscriber 6 accessing the Java application from an interface listing all the applications stored on the mobile phone 7. The ROM 30 of the phone 7 is used to receive the Java application issued, and stores additional instructions and interface designs to enable the media alert and sharing processes to be performed. Alternative application formats to Java may be used which provided the necessary interfaces and functionality necessary for media alert and sharing processes.

In addition to providing the necessary functionality for the media alert and sharing processes at a mobile phone level, the Java application may also be used to enable contact management on the mobile phone. Interfaces may be provided through which contacts can be added or removed, or existing contacts re-classified, and such changes are then communicated through the PLMN to the server 11 to update the subscriber's profile.

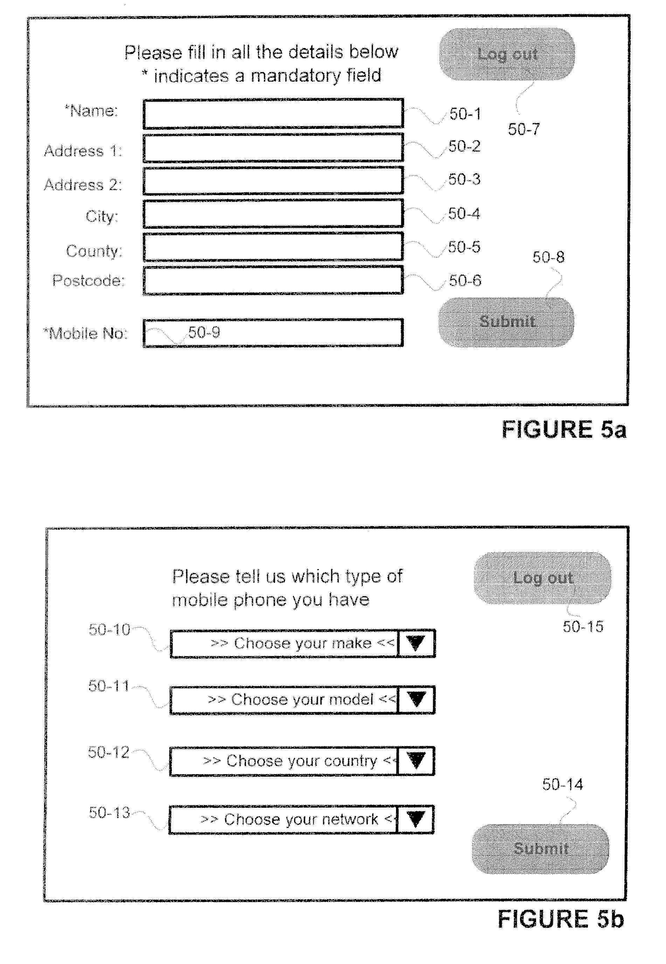

Figure 5a shows an example of a first user interface used on the subscription website used by the subscriber 6 in step S40-1 of the subscription process. The interface contains a series of fields 50-1 to 50-7, which are filled in by the subscriber 6 when creating a subscriber profile. The fields relate to name, address, and mobile number for example, as shown in Figure 5a, although additional information may also be submitted using a similar interface. The name field 50-1 may serve as the basis for a user name for the subscriber profile, with which a password may be associated via another user interface (not shown). Alternatively, a user name and password may be set up before the interface of Figure 5a is reached. Command button "submit" 50-8 enables the information contained in the filled-in fields 50-1 to 50-7 to be submitted to the server 11, and loads the second user interface shown in Figure 5b, described below. Command button 50-9 is a "log-out" button that returns the subscriber 6 to a home page of the subscription website, the subscriber 6 being required to log into the service using a user name and password to continue entering profile details.

It is possible to configure the website so that completion of some of the fields 50-1 to 50-7 is mandatory, and an attempt to submit information without completing mandatory fields will be unsuccessful. A user name 50-1 and mobile number 50-7, for example, are typical fields which should be classed as mandatory.

Figure 5b shows an example of the second user interface, which is used to enable details of the subscriber's mobile phone 7 to be registered. Four drop-down boxes 50-10 to 50-13 are used to enable a user to select the model, country and network used by the mobile phone 7 from predetermined lists, as is known in the art. "Submit" and "log-out" buttons, 50-14 and 50-15, perform the same function as buttons 50-8 and 50-9 described above.

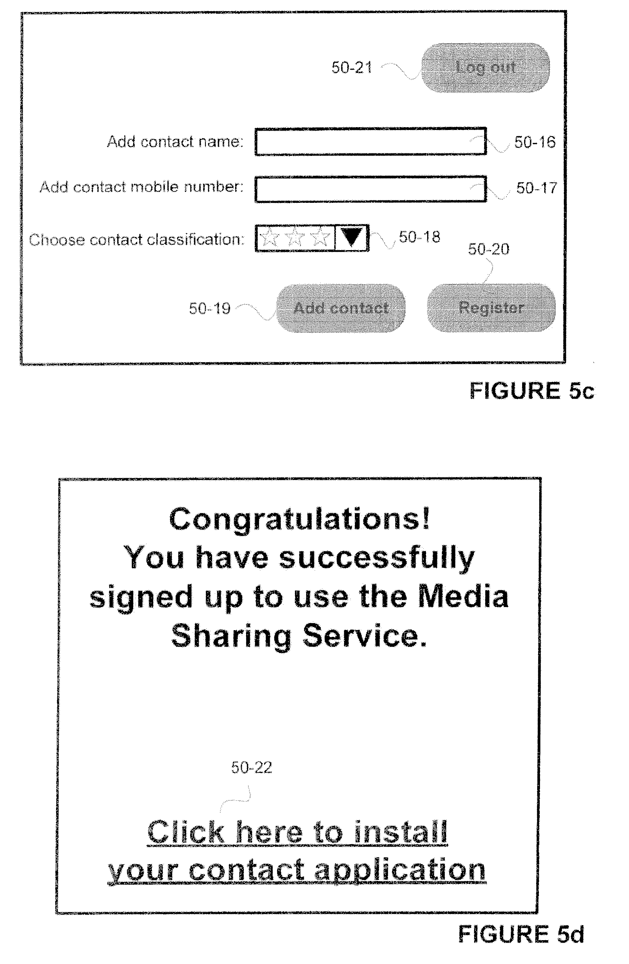

Having added user data to the subscriber profile, the next stage in the subscription process is the generation of a contact list. Figure 5c shows an example of a user interface which is used in step S15-2 of the subscription process. The interface comprises a field 50-16 into which a contact name is entered. Field 50-17 is for the number of the mobile phone or device for that contact. Drop-down box 50-18 enables a classification to be selected for that particular contact from a predetermined list. The example shown in Figure 5c is a generic star-rating system, although many other classification schemes may also be used, such as age categories used in film classification. Command button "Add contact" 50-19 enables the information for the contact on the screen to be submitted, upon which the user interface is refreshed so that all fields 50-16, 50-17 and 50-18 are empty, and ready to receive information for a new contact. When all contacts have been entered, the "Register" command button 50-20 completes the submission of the contact details, and enables the subscriber 2 to reach the homepage of the website for example. Similarly, "log-out" button 50-21 performs the same function as buttons 50-9 and 50-15 described above.

By submitting the required information in each user interface, and recording it on the server 11 in step S15-3, a subscriber profile is created at the server 11. The homepage of the subscription website may offer a number of features (not shown) such as enabling the subscriber 6 to view or edit the subscriber profile. Additionally, the subscriber 6 may be able to control the billing associated with a subscriber profile by setting various options and billing addresses, as will be discussed below.

Once the subscriber profile has been generated and stored in the server 11, a WAP push message is transmitted in step S40-4 to the subscriber's mobile phone 7. The push message may be generated automatically on selection of the "Register" command button 50-20 on the interface of Figure 5c, or on selection of another command button on a separate interface (not shown). Figure 5d shows an example of the text of such a push message as viewed on the display 22 of the mobile phone 7. Hyperlink 50-22 is selected by the subscriber 6 via keypad 21, to install the Java application required to enable the video alert and sharing process to be run on the mobile phone 7. As discussed above, the Java application is transmitted to the phone 7 through the PLMN and base station 14, where is it stored in the ROM 30 and is accessible from a user interface listing the applications of the phone 7.

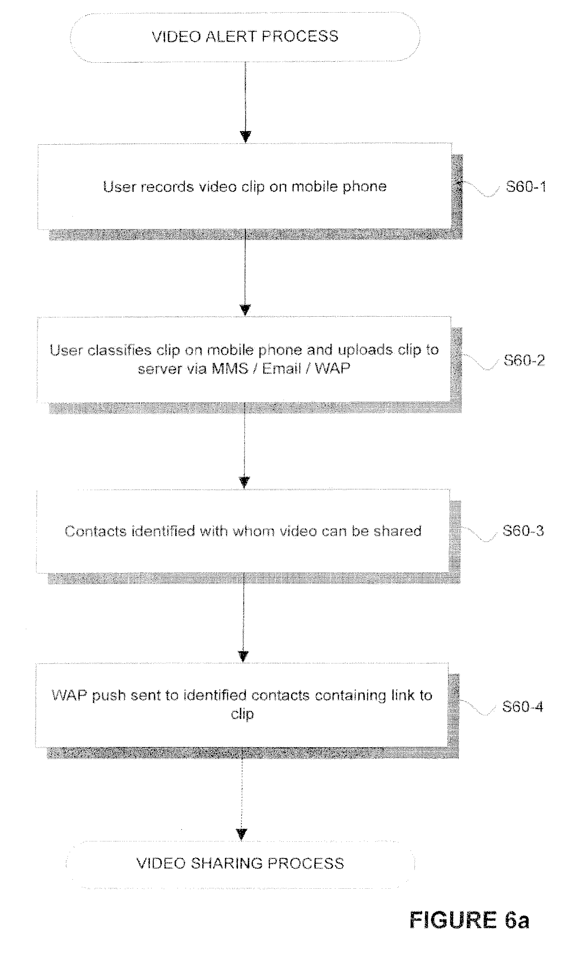

Figure 6a is a flow chart showing the steps involved in the video alert process used in the media alert module of the media sharing service. The video alert process is an example of the more general media alert process described above. The steps and their means of implementation are provided by the media alert module described above, which includes a set of program instructions and interfaces stored in the ROM 10 of the processing module 1, together with the Java application stored in the mobile phone memory 30.

At step S60-1, the subscriber's mobile phone 7 has been configured for use by installing the Java application issued in step S40-4. The configuration preferably has no effect on the existing functionality of the mobile phone 7, only the provision of additional features. Accordingly, subscriber 6 may use the camera 8 on the phone 7 to record a video clip and store it in mobile phone media library 28, as would be possible without the Java application being installed. Alternatively, the subscriber 6 may receive a video clip from another mobile device user, over MMS or file-sharing means such as an infrared connection or BLUETOOTH. The subscriber 6 may build up the library 28 of video files stored on the phone 7 by recording or receiving a plurality of files.

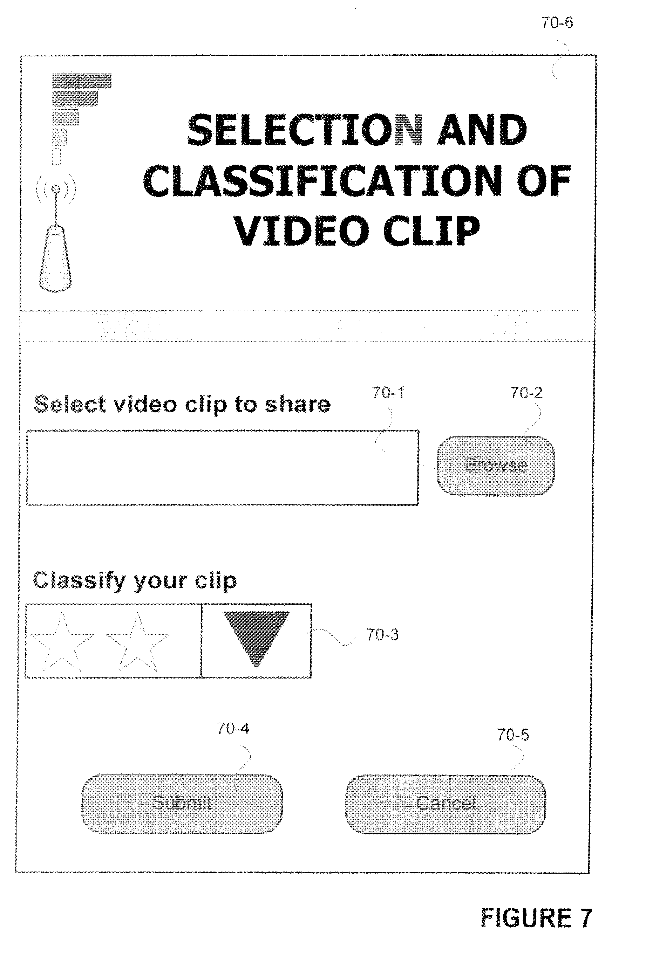

In step S60-2 of this example, the video clip recorded by the camera 8 in step S60-1 is classified according to its content. This is achieved by assigning a classification rating to the clip, using a simple user interface described in more detail below with reference to Figure 7.

It is also possible to select and classify clips for sharing from the media library 28 on the phone 7 via a simple user interface created by the Java application issued in step S40-4.

The video clip and its assigned classification is then submitted from the phone 7 to the processing module 1, for further processing and sharing. The submission is performed through communication means 14 via MMS, Email, WAP or the like.

In step S60-3, the processing module 1 analyses the submitted video clip and classification, together with the sender of the clip and accesses the appropriate subscriber profile stored on the server 11. By comparing contact classification with the submitted video classification, the processing module 1 determines the contacts with whom the submitted video clip may be shared.

In step 60-4, a WAP push message is sent by the processing module 1 to the mobile device 17-a, 17-b, 17-c of each selected contact, alerting the contact to the presence of the video clip in the media library 15, and also the identity of the subscriber 6 who uploaded the clip. The message contains a link that enables the submitted media to be downloaded and viewed. The WAP push message is transmitted through communication means 16.

At this stage, the video alert process is complete, and no further processing is performed without the input of the contacts with whom the video is to be shared.

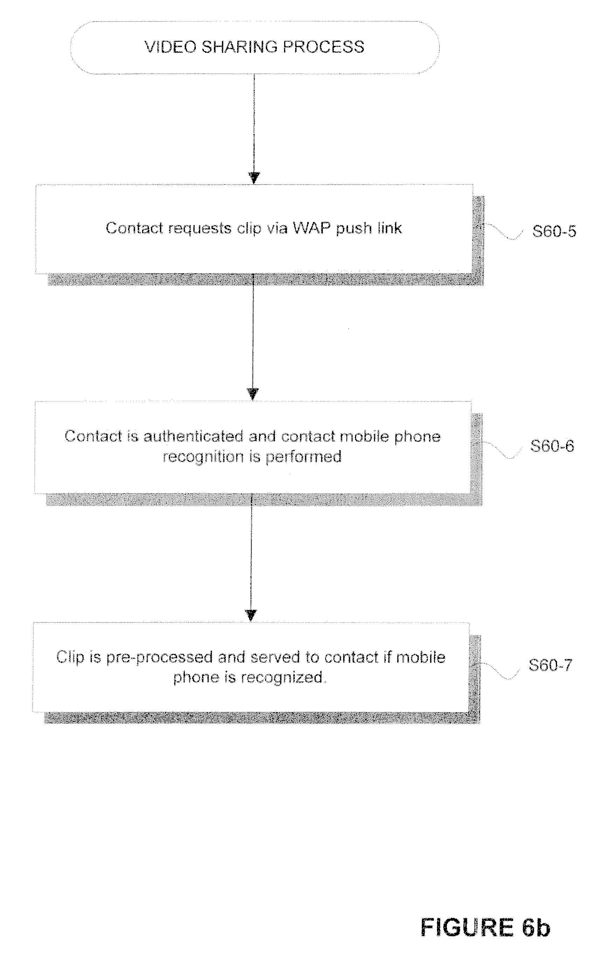

Figure 6b is a flow chart showing the steps involved in a video sharing process performed by the media sharing module 4. The video sharing process is an example of the more general media sharing process described above. The steps and their means of implementation are provided by the media sharing module 4 described above, which includes a set of program instructions and interfaces stored in the ROM 13 of the processing module 7.

In step S60-5, one or more contacts 17-a, 17-b, 17-c, having received a WAP push message, use the link contained in the message to request the video clip. The request is submitted to the processing module 1 via communication means 16.

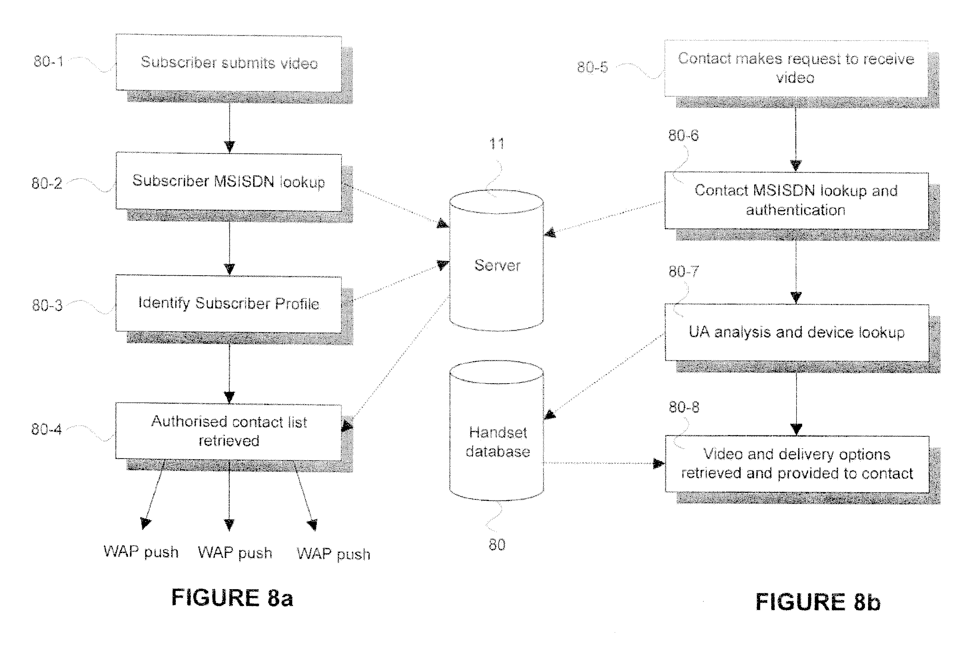

In step S60-6, the contact making the request is authenticated by the processing module, by comparing contact information, such as mobile phone number obtained from the request itself, with data stored in the subscriber profile on the server 11, as will be described in more detail below with reference to Figure 8.

If the contact is successfully authenticated, e.g. contact 17-a, the video clip is delivered to the requesting contact in step S60-7 via communication means 16, where it can be viewed on the mobile phone 17-a, thus completing the sharing process. If the contact is not successfully authenticated, the video clip is not shared with the contact, and an appropriate error message is sent to the contact instead, stating that the contact could not be authenticated. Before transmission of the video clip, it is pre-processed so that it is converted into a format which is suitable for display on the mobile phone 17-a.

The advantage of the video sharing process described above is that all steps contained in the media alert and sharing modules are performed either by the subscriber 6, or a contact, on a mobile phone, or automatically by the processing module 1, and are separated from those steps in the subscription process, which require the use of a computer.

Figure 7 shows an example of a user interface from the Java media alert and sharing application issued to the mobile phone 7 in step S40-4. The interface shown is used in the video classification step S60-2 of the video sharing process, and Figure 7 shows how the interface appears on the display 22 of the mobile phone 7. The keypad 21 of the mobile phone 7 is used to navigate the user interface.

Field 70-1 enables the entry of the filename of a video clip to be shared, if known by the subscriber 6. If the filename is not known, the subscriber 6 may select "Browse" button 70-2, which causes a user interface (not shown) to be displayed which shows the contents of the media library 28. Such an interface simply provides a window showing the contents of the media library, with means for highlighting a file name and choosing command options such as "select" or "cancel" or the like. Files are displayed as a list of file names, together with associated properties such as file size, date, resolution, image size and the like, and a thumbnail image of one of the frames of the video clip may also be displayed where appropriate, as is well known in the art. Thus one or more video clips may be selected for sharing. If the files are selected from the media library interface, the selected filenames are preferably copied into the filename field 70-1. In this example, classification of a single video clip will be described.

Drop-down box 70-3 has the same format as drop-down box 50-18 described above, and contains classification ratings, one of which is selected and assigned to the file contained in field 70-1. Again, a generic star-rating is shown as an example in Figure 7. The assignment of the appropriate classification to the video clip is then completed by selection of the "Submit" command button 70-4, and the clip and classification are automatically submitted to the processing module 1 as described in step S60-4.

A "cancel" command button 70-5 enables the subscriber 6 to exit the media sharing application and return to normal operation of the phone. Window 70-6 is of a format specified by the mobile phone theme of the subscriber 6, as is conventional in the art. Window 70-6 therefore contains standard graphical symbols representing signal strength, and battery power, as well as an interface heading.

Figure 8a shows the stages involved in WAP push generation on submission of media to the processing module 1 and Figure 8b shows the stages involved in contact authentication and video delivery stages of the video alert and sharing processes, as performed by the processing module 1.

When a subscriber 6 submits a video clip in step S80-1 (equivalent to S60-2 above), processor 12 analyses the source of the incoming video clip in step S80-2 to determine the Mobile Station Integrated Services Digital Network (MSISDN) number of the subscriber 6. Such information is held on the server 11 as part of profile of that particular subscriber, and so the processor 12 is able to identify the subscriber profile in step S80-3 which is to be associated with the incoming video clip. Having done this, the processor 12 determines in step S80-4 the contacts with whom the video clip is to be shared by comparing the classification of the video clip with the classifications of the contacts stored in the subscriber profile. A WAP push message is then sent to each contact deemed to be allowed to receive the video clip, alerting the contacts to the presence of the clip in the server 11 from the subscriber 6. A link is provided to enable the video clip to be requested by the contact.

If a contact requests to view the video clip as in step S80-5 (equivalent to S60-4), the processing module 1 analyses, in step S80-6, the MSISDN number of the contact making the request, and compares it with the MSISDN numbers stored in the subscriber profile to determine whether the contact has a valid invitation to view the video clip. If the requesting contact has been successfully authenticated, the processing module 1 performs device recognition in step S80-7 and presents valid delivery options of the clip for that device in step S80-8.

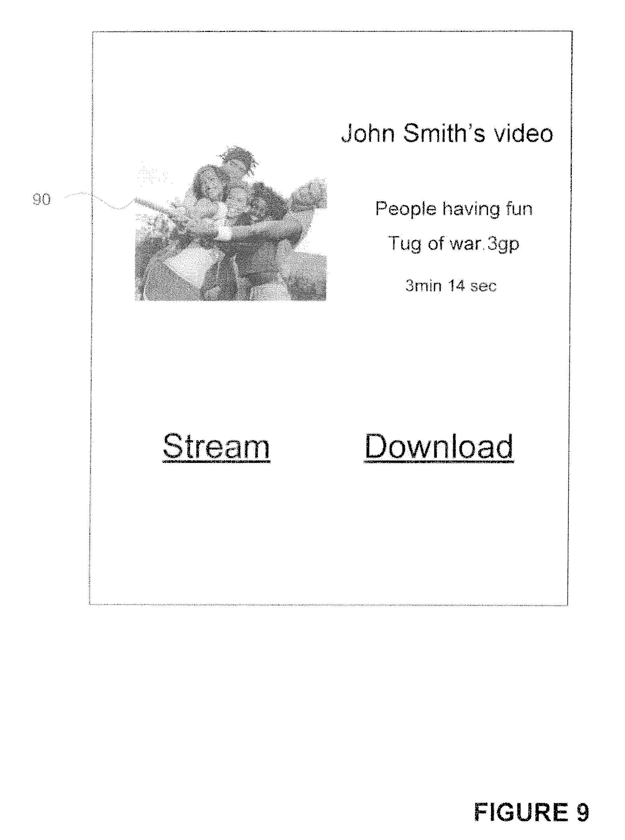

Device recognition in step S80-7 is performed following an analysis of the User Agent (UA) header contained in the contact's request. The UA header contains information identifying the device. Various parameters associated with a range of available devices may be stored in a handset database 80 which can be accessed by the processing module 1. Such parameters may be the manufacturer, operating system and version number, screen size and colour capability, and device memory size for example. In accordance with information retrieved from the handset database 80 for the device identified by the received UA header, options for the delivery of the video to that device can be determined, with regard to the format, resolution and compression ratio, for example, of the video to be provided. The delivery options are sent to the contact via a WAP push message, an example of which is shown in Figure 9.

Once delivery options have been determined for a particular contact, a record of the options associated with that particular contact can be maintained on the server 11 as part of the subscriber profile, so that when that contact makes future requests for video information, the step of accessing the handset database 80 can be bypassed and the delivery options can be obtained directly from the server 11.

Figure 9 shows an example of how a WAP push message sent to a contact mobile device 17-a appears on the device display 22. A frame 90 of the video clip is shown in the message in thumbnail form, alongside information such as the file name, subject category and duration of the clip. An identification of the subscriber 6 from whom the video clip originated is also included, "John Smith" in this example.

Beneath the thumbnail image 90 are two video delivery options which may be selected by the contact via hyperlinks. A stream option causes the video clip to be transmitted and played from the processing module 1 in real time as a video stream. It is possible for video to be streamed to a plurality of contacts as a live broadcast, by configuring a response time window, controlled by processing module 1, during which contacts may request the broadcast, so that the broadcast may begin once the time window has elapsed. A download option causes the video clip to be sent to the contact mobile device 17-a for storage in a media library associated with that device 17-a. The video can be played using the video playing capability of the device 17-a at a later stage.

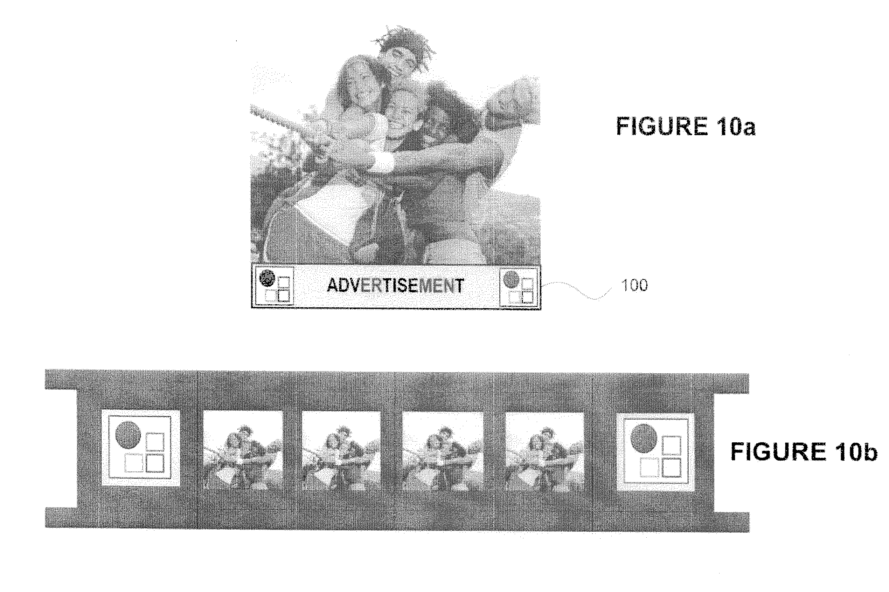

As mentioned above in step S60-8, the pre-processing of the video clip may involve the introduction of advertising information to provide increased revenue to the network operator. Figure 10a shows a first arrangement in which advertising information is continuously scrolled across a bar 100 positioned underneath the video display. Figure 10b shows an alternative scheme in filmstrip form in which an advertisement is introduced before and after the video clip is shown, although it will be appreciated that various other advertising schemes are possible.

As well as providing the possibility of revenue generation for the network operator, the introduction of advertisements enables a number of charging schemes to be offered to subscribers of the service of the present invention. For example, a tiered charging scheme wherein a highest tariff enables video to be free of advertising, and wherein a lowest tariff involves the highest level of advertising, can be applied. Subscribers can select or change their charging scheme through an option on the website, and store the setting as part of their subscriber profile. The billing address may be obtained from the subscriber profile.

In a second embodiment of the present invention, media files and their classifications are uploaded to the server 11 via a website, rather than from a mobile phone. This may be a preferable option where a computer is available, as it is likely to have an easier interface to use than the Java application of a mobile phone. The nature of the subscription process and the sending of WAP push messages to contacts will have the same functionality however. In addition to the uploading to the server 11, the media files may be appropriately transcoded and sent to either the subscriber's mobile phone 7 for storage in its media library 28, or to contacts, or to both, in accordance with the classifications via the WAP push message alert system described above.

In the embodiments described, a star-rating system has been used as the basis of the media classifications used. It will be appreciated that other rating schemes may also be used as discussed above. It is also possible for more than one scheme to be used, so that contacts may belong to one or more classification lists, for example a content classification, and a time zone classification. The latter may be appropriate where for contacts in different countries from the sender, who may not wish to be alerted to video clips when it is night in the contact's time zone, but not in the subscriber's time zone. As well as using a selection of predetermined classification schemes, a user interface could be provided on the registration website, or even the Java application described above, to enable a subscriber to generate a personalised classification scheme.

As an improvement to the service described, a set of editing tools may be provided as a software application, allowing users to create their own WAP portals, from which video content may be made available. The WAP portal would function substantially as an online photo or video album, where access to the album could be restricted if desired, via the invitation-only in the form of WAP push alerts. In addition to enabling opportunities for content charges to be applied by the owner of the WAP portal, the portal would provide its creator with the opportunity to sell mobile wallpapers or ringtones for example.

As well as being suitable for personal use, the service described may have business applications, for example in connection with conferences and exhibitions. In such a scenario, the provider of the service would work in partnership with conference organisers to enable video recordings of speakers to be distributed to the attendees after the conclusion of the conference. Such a service would have particular application to conferences where it is not possible for attendees to be present to listen to every speaker. Another business application may be that of B2C (Business-to-Consumer) project rooms.

## Claims

1. A method of sharing media among a plurality of mobile device users, comprising:
assigning media classification information to media stored in a memory;
transmitting the media and its associated classification information to a processing module; and
comparing media classification information with mobile device user classification data accessible to the processing module and alerting a mobile device user to the presence of media in the processing module in accordance with the result of the comparison.

2. A method of sharing media among a plurality of mobile device users, comprising:
receiving at a processing module, media and associated classification information from a mobile device user, the media having been classified by the user in categories defined by media classification information;
comparing the received media classification information with mobile device user classification data accessible to the processing module,
and alerting at least one other mobile device user to the presence of media in the processing module in accordance with the result of the comparison.

3. A method according to claims 1 or 2 wherein media is stored in a mobile device memory, and the media classification is performed on the mobile device.

4. A method according to any preceding claim wherein media classification is performed on the basis of the users intended to be alerted to the presence of the media in the processing module.

5. A method according to claim 4 wherein media classification is performed in accordance with age categories.

6. A method according to claim 4 in which media classification categories are defined by the subscriber.

7. A method according to any preceding claim wherein the alerting is performed using a WAP push message.

8. A method according to any preceding claim further comprising:
receiving a request from a mobile device user to receive the media to which he has been alerted;
authenticating the mobile device user in accordance with user information accessible to the processing module; and
preparing the media and transmitting it to the user in accordance with the result of the authentication.

9. A method according to claim 8 in which the authentication further comprises device recognition by analysing the User Agent header of the request to receive media, and determining the device using information held in a database.

10. A method according to claim 9 wherein the preparation for transmission comprises transcoding the media to a format which can be decoded by the mobile device of the user, the format being determined in accordance with information retrieved from said database.

11. A method according to claim 10 comprising presenting the user with media delivery options with which the media can be received by the user.

12. A method according to any one of claims 8 to 11 wherein the preparation for transmission comprises introducing advertising information into the media.

13. A method according to any preceding claim wherein the media is a video clip.

14. A method of configuring a subscriber mobile device to be used for sharing media, comprising:
generating a profile of subscriber information on a server, at least part of the subscriber information being user information for contacts with whom the subscriber is intending to share media;
associating a subscriber mobile device with the subscriber profile;
classifying the contacts; and
issuing an application to the subscriber mobile device to enable media classification to be performed in the method of any preceding claim.

15. A method according to claim 14 wherein the application is a Java application.

16. A method according to claim 14 or 15 wherein the user information comprises MSISDN data for a user mobile device.

17. A method according to any one of claims 14 to 16 wherein the contact classification is performed in accordance with the type of media which is intended to be shared with the contact.

18. A method according to claim 17 wherein contact classification is performed in accordance with age category.

19. A method according to claim 17 in which contact classification categories are defined by the subscriber.

20. A method according to any one of claims 14 to 19 wherein the contacts are arranged in a phonebook stored on a server, to be accessible by the processing module.

21. A method according to any one of claims 14 to 20 wherein contact classification is performed using the application issued to the subscriber mobile device.

22. A method according to any one of claims 14 to 21 wherein the subscriber profile is generated on a website and stored on a server, to be accessible by the processing module.

23. A mobile device application containing computer-executable instructions for enabling, when run on a subscriber mobile device, the device to be operable according to the method of any one of claims 14 to 22.

24. A mobile device arranged to receive a mobile device application containing computer-executable instructions for configuring the device to be operable according to the method of any one of claims 14 to 22.

25. A method according to any one of claims 14 to 22 wherein at least one of the subscriber mobile device and user mobile device is a mobile phone.

26. A method according to any one of claims 14 to 22 wherein at least one of the subscriber mobile device and user mobile device is a PDA.

27. Apparatus for sharing media among a plurality of mobile device users, comprising:
a processing module configured to receive media and associated classification information from a mobile device user, the media having been classified by the user in categories defined by media classification information;
means for comparing the received media classification information with mobile device user classification data accessible to the processing module, and
means for alerting at least one other mobile device user to the presence of media in the processing module in accordance with the result of the comparison.

28. Apparatus according to claim 27 wherein the means for alerting is operable to generate a WAP push message.

29. Apparatus according to claim 27 or 28 in which the processing module is further configured to receive a request from a user to receive the media to which he has been alerted.

30. Apparatus according to claim 29 further comprising:
means for authenticating the mobile device user making the request in accordance with user information accessible to the processing module; and
means for preparing the media and transmitting it to the user from the processing module in accordance with the result of the authentication.

31. Apparatus according to claim 30 in which the authentication means is operable to perform mobile device recognition by analysing the User Agent header of the request to receive media, and to determine the mobile device of the user using information held in a database accessible to the authentication means.

32. Apparatus according to claim 31 in which the preparation means is operable to transcode the media to a format which can be decoded by the mobile device of the user, the format being determined by the information held in the database accessible to the authentication means.

33. Apparatus according to claim 32 comprising means for presenting the user with media delivery options with which the media can be received by the user.

34. Apparatus according to any one of claims 30 to 33 in which the preparation means is operable to introducing advertising information into the media.

35. A system for sharing media among a plurality of mobile device users, comprising:
means for assigning media classification information to media stored in a memory;
means for transmitting the media and its associated classification information to a processing module;
means for comparing media classification information with mobile device user classification data accessible to the processing module; and
means for alerting a mobile device user to the presence of media in the processing module in accordance with the result of the comparison.

36. A system according to claim 35 in which media is stored in a mobile device memory, and the media classification is performed on the mobile device.

37. A system according to claim 35 or 36 in which the media classification means is operable to perform classification on the basis of the users intended to be alerted to the presence of the media in the processing module.

38. A system according to any one of claims 35 to 37 in which the alerting means comprises means for generating a WAP push message.

39. A system according to any one of claims 35 to 38 further comprising:
means for receiving a request from a mobile device user to receive the media to which he has been alerted;
means for authenticating the mobile device user in accordance with user information accessible to the processing module; and
means for preparing the media and transmitting it to the user in accordance with the result of the authentication.

40. A system according to claim 39 further comprising:
storage means for storing information relating to mobile devices;
wherein the authentication means is operable to perform mobile device recognition by analysing the User Agent header of the request to receive media, and to determine the mobile device of the user using data held in the storage means.

41. A system according to claim 40 in which the preparation means is operable to transcode the media to a format which can be decoded by the determined mobile device of the user, said format being specified by information held stored in the storage means.

42. A system according to claim 41 comprising means for presenting the user with media delivery options with which the media can be received by the user.

43. A system according to any one of claims 39 to 42 wherein the preparation means is operable to introduce advertising information into the media.

44. A system according to any one of claims 35 to 43 wherein the media is a video clip.

45. A system for configuring a subscriber mobile device to be used for sharing media, comprising:
means for generating a profile of subscriber information on a server, at least part of the subscriber information being user information for contacts with whom the subscriber is intending to share media;
means for associating a subscriber mobile device with the subscriber profile;
means for classifying the contacts; and
means for configuring the subscriber mobile device to enable media classification to be performed by the system of any one of claims 35 to 44.

46. A system according to claim 45 wherein the means for configuring the subscriber mobile device comprises a Java application arranged to be issued to the subscriber mobile device.

47. A system according to claim 45 or 46 wherein the user information comprises MSISDN data for a user mobile device.

48. A system according to any one of claims 45 to 47 wherein the contact classification means is arranged to perform classification in accordance with the type of media which is intended to be shared with the contact.

49. A system according to claim 48 wherein contact classification is arranged to be performed in accordance with age category.

50. A system according to claim 49 in which classification categories may be defined by the subscriber.

51. A system according to any one of claims 45 to 50 wherein the contacts are arranged in a phonebook stored on a server, to be accessible by the processing module.

52. A system according to any one of claims 45 to 51 wherein the subscriber mobile device configuration means is arranged to configure the subscriber mobile device so that the contact classification can be performed by said subscriber mobile device.

53. A system according to any one of claims 45 to 52 wherein the subscriber profile generation means is arranged to be accessed via a website and the profile is arranged to be stored on a server, to be accessible by the processing module.

54. A system according to any one of claims 45 to 53 wherein at least one of the subscriber mobile device and user mobile device is a mobile phone.

55. A system according to any one of claims 45 to 53 wherein at least one of the subscriber mobile device and user mobile device is a PDA.
